# EUROPÄISCHE PATENTANMELDUNG

(11) **EP 2 860 234 A1**
(43) Veröffentlichungstag der Anmeldung: **15.04.2015**
(21) Anmeldenummer: 13188044.5
(22) Anmeldetag: 10.10.2013
(51) Int. Cl.: C09K 8/08, C09K 8/20, C08L 89/00, C08B 31/00, C08H 1/00, C08H 99/00, C08L 3/04

(54) **Verwendung eines chemisch modifizierten Polysaccharid-Protein-Blends als Additiv für Bohrspülungen**

(71) Anmelder: BASF SE, 67056 Ludwigshafen (DE)
(72) Erfinder: Einfeldt, Lars, 07743 Jena (DE); Lafuente Cerda, Oscar, 85560 Ebersberg (DE); Reichenbach-Klinke, Roland, 83278 Traunstein (DE)
(74) Vertreter: Witz, Michael

(57) **Zusammenfassung**

Verwendung eines chemisch derivatisierten Polysaccharid-Protein-Blends, enthaltend partiell wasserquellbare Polysaccharide und Proteine, wobei die Polysaccharide und Proteine jeweils zumindest partiell chemisch kovalent modifiziert sind durch a) mindestens eine nicht-vernetzende Derivatisierung; und b) mindestens eine vernetzende Derivatisierung, wobei die Polysaccharide und Proteine zumindest partiell chemisch kovalent miteinander vernetzt sind, und wobei der chemisch derivatisierte Polysaccharid-Protein-Blend in wässrigem Medium ein Hydrogel ausbildet, als Additiv für Bohrspülungen - bei der Erschließung, Komplettierung und Ausbeutung von unterirdischen Erdöl- und Erdgasvorkommen sowie bei Tiefenbohrungen.

## Beschreibung

Die vorliegende Erfindung betrifft die Verwendung eines chemisch modifizierten Polysaccharid-Protein-Blends als Additiv für Bohrspülungen.

Tiefbohrungen verlangen stets eine entsprechende Bohrspülung. Diese Bohrspülungen lassen sich klassifizieren, entweder nach der Art der flüssigen Phase (Wasser, Öl), nach der der Art der in der Spülung enthaltenen Feststoffe (Tonspülungen, feststofffreie Spülungen) oder nach der Dichte, wo wiederum zwischen unbeschwerten Spülungen und beschwerten Spülungen unterschieden wird. Bohrspülungen dienen im Wesentlichen zur Stützung des Bohrloches und zum Austrag des erbohrten Bodenmaterials (Bohrklein), sie führen die am Bohrmeißel entstehende Reibungswärme ab, sie reduzieren den Reibungswiderstand für Bohrmeißel und rotierendes Bohrgestänge und dämpfen dessen Schwingungen.

Spülungen, deren flüssige Phase Wasser ist, werden als wasserbasierte Spülungen bezeichnet. Häufig verwendet man Bentonit-Wasser Gemische, welche mittels hochtouriger Spezialmischer zu einer Suspension aufbereitet werden. Zur gezielten Steuerung der rheologischen Eigenschaften werden der Suspension auch Hilfsmittel, meist Polymere, zugegeben. Für das rheologische Verhalten von Bohrspülsuspensionen und -lösungen ist es von Bedeutung, dass durch die Zugabe von Tonteilchen und/oder polymeren Additiven möglichst eine plastische Viskosität der Spülung erzeugt wird. Beginnt nämlich die Spülungszirkulation, so werden die Kontaktstellen zwischen den Bentonit-Teilchen gebrochen bzw. Überstrukturen der gelösten Polymere zerstört und aufgebrochen, so dass die Spülung umso dünnflüssiger wird, je höher die äußere Pumpkraft und somit die Fließgeschwindigkeit ist. Mit anderen Worten, die Spülungen werden mit zunehmender Scherrate niedrigviskoser, was man auch als pseudoplastisches Verhalten bezeichnet.

Polymere, die ein solches rheologisches Verhalten zeigen, sind beispielsweise Hydrogele. Ihre wässrigen Lösungen zeichnen sich durch hohe Speichermodule (G') und Verlustmodule (G") aus. In ihnen spiegelt sich der elastische (G') und reibungsbehaftete Anteil (G") wieder, deren Auswirkung die Qualität der Bohrspüllösung maßgeblich beeinflusst. Mit anderen Worten, erst durch die polymeren Additive ist die Spülung in der Lage, das Bohrklein von der Sohle nach oben zu transportieren, es bei Stillstand der Spülpumpen in Schwebe zu halten, die Wände durch Bildung eines Filterkuchens zu schützen, einen Gegendruck gegen die Drücke der Flüssigkeiten und Gase in der Formation zu liefern und den Meißel zu kühlen und zu schmieren.

Wie bereits erwähnt, müssen die in der Bohrspülung verwendeten polymeren Additive eine Vielzahl von Funktionen erfüllen. Eine dieser Funktionen ist die Fluid-Loss-Kontrolle. Dabei geht es vereinfacht gesagt darum, das Wasser in der Bohrspülung zu halten. Da die Bohrspülung bei ihrer Zirkulation im Bohrloch häufig mit porösen Gesteinsformationen, welche der Bohrspülung Wasser entziehen können, in Kontakt ist, ist der Zusatz von Fluid-Loss-Additiven unerlässlich. Diese Fluid-Loss-Additive bilden einen Filterkuchen an der Bohrlochwand und verhindern dadurch den Abfluss von Wasser aus der Bohrspülung in die Formation.

Als Fluid-Loss-Additive werden nach dem Stand der Technik beispielsweise Stärke und Stärkederivate wie Hydroxypropylstärke oder auch polyanionische Cellulose eingesetzt. Bei höheren Temperaturen kommen synthetische Polymere zur Anwendung. Exemplarisch seien hier genannt Polydrill, ein anionisches Kondensat der Firma BASF Construction Polymers GmbH, und AMPS®-basierte Copolymere, wie beispielsweise in EP 1358233 A2 und den darin zitierten Schriften beschrieben.

Neben den bereits erwähnten Polysacchariden sind bislang keine weiteren, auf nachwachsenden Rohstoffen basierenden geeigneten Verbindungen bekannt geworden.

Die Erfinder haben sich daher die Aufgabe gestellt alternative, auf nachwachsenden Rohmaterialien basierende Verbindungen zu entwickeln, die möglichst zu einer anwendungstechnischen Verbesserung führen sollten.

Diese Aufgabe wurde mit den Merkmalen des unabhängigen Anspruchs gelöst. Die abhängigen Ansprüche zeigen vorteilhafte Ausführungsformen auf.

In der noch nicht veröffentlichten PCT/EP2013/065441 vom 22.07.2013 mit Priorität vom 20.07.2012 wurde ein chemisch derivatisierter Polysaccharid-Protein-Blend (PPB) offenbart, enthaltend partiell wasserquellbare Polysaccharide und Proteine, wobei die Polysaccharide und Proteine jeweils zumindest partiell chemisch kovalent modifiziert sind durch a) mindestens eine nicht-vernetzende Derivatisierung; und b) mindestens eine vernetzende Derivatisierung, wobei die Polysaccharide und Proteine zumindest partiell chemisch kovalent miteinander vernetzt sind, dadurch gekennzeichnet, dass der chemisch derivatisierte Polysaccharid-Protein-Blend in wässrigem Medium ein Hydrogel ausbildet.

Außerdem wird in PCT/EP2013/065441 die Verwendung des chemisch modifizierten PPB lediglich als Additiv für Trockenmörtelanwendungen beschrieben. Unerwähnt blieb hier die Verwendung des chemisch modifizierten PPB als Additiv für Bohrspülungen.

Es wurde nun überraschend gefunden, dass sich dieser chemisch modifizierte PPB ebenfalls als Additiv für Bohrspülungen, insbesondere als Fluid-Loss-Additiv und rheologisches Additiv verwenden lässt.

Der Gegenstand der vorliegenden Erfindung ist demnach die Verwendung eines chemisch derivatisierten Polysaccharid-Protein-Blends, enthaltend partiell wasserquellbare Polysaccharide und Proteine, wobei die Polysaccharide und Proteine jeweils zumindest partiell chemisch kovalent modifiziert sind durch a) mindestens eine nicht-vernetzende Derivatisierung; und b) mindestens eine vernetzende Derivatisierung, wobei die Polysaccharide und Proteine zumindest partiell chemisch kovalent miteinander vernetzt sind, und wobei der chemisch derivatisierte Polysaccharid-Protein-Blend in wässrigem Medium ein Hydrogel ausbildet, und zwar als Additiv für Bohrspülungen.

Das verwendete PPB-Hydrogel ist durch ein hohes Wasserbindungspotential gekennzeichnet und somit ideal als Fluid-Loss-Additiv geeignet.

Das Wort Gel leitet sich von dem Begriff Gelatine (lat. gelatum: Gefrorenes) ab. In der Kolloidchemie versteht man darunter ein formbeständiges, deformierbares, an Flüssigkeit reiches disperses System aus mindestens zwei Komponenten, die zumeist aus einem festen, kolloidal verteiltem Stoff und einer Flüssigkeit als Dispersionsmittel bestehen.

Das dreidimensionale Netzwerk eines Gels bildet sich durch Vernetzungen zwischen den einzelnen Polymerketten. Diese Netzpunkte sind entweder chemischer (kovalenter) oder physikalischer Natur. Physikalische Wechselwirkungen können ionischer (Coulomb), nicht-ionischer (Wasserstoffbrücken) oder micellarer Natur (Van-der-Waals-Kräfte) sein. Wenn das Dispersionsmittel aus Wasser besteht, so spricht man von Hydrogelen. Sie basieren auf hydrophilen, aber wasserunlöslichen Polymeren. In Wasser quellen diese Polymere unter Formerhaltung bis zu einem Gleichgewichtsvolumen auf.

Ob ein Gel vorliegt kann mittels dynamischer Rheologie bestimmt werden, in dem der Speichermodul G' und Verlustmodul G" in Abhängigkeit von der Frequenz bestimmt werden. Aufgrund des Verlaufs dieser Kennwerte kann eine Aussage über die vorhandene Struktur, viskoelastische Lösung oder Gel, getroffen werden. Nach der Definition eines Gels ist der Speichermodul G' oberhalb des Verlustmoduls G" und ist nahezu unabhängig von der Messfrequenz über mindestens eine Dekade.

Durch die nicht-vernetzende Derivatisierung der partiell wasserquellbaren Polysaccharide und Proteine wird erreicht, dass eine Destrukturierung von Überstrukturen stattfindet. Beispielsweise wird durch die Destrukturierung eine Rekristallisation der ursprünglich partiell wasserquellbaren Polysaccharide unterdrückt. Zum einen ergibt sich dadurch eine erhöhte Quellbarkeit und Löslichkeit der derivatisierten Polysaccharide, welche sich in einer Kaltwasserquellbarkeit manifestieren kann. Zum anderen wird durch das Aufbrechen der Überstrukturen eine homogene Derivatisierung entlang der Polysaccharidkette möglich, welche die Fähigkeit zur Hydrogelbildung von partiell wasserquellbaren Polysacchariden begründet, wenn eine entsprechende Vernetzung zwischen Glucanketten der Polysaccharide bzw. zwischen Polysaccharid und Protein vorliegt.

Die nicht-vernetzende Derivatisierung von Proteinen kann außerdem eine irreversible Denaturierung der Proteine bewirken. Denaturierte Proteine nehmen eine "Random Coil"-Struktur ein, welche eine Derivatisierung des Proteins entlang der Polypeptidkette ermöglicht d.h. eine Derivatisierung an Stellen, welche im nativen Proteinzustand nicht zugänglich sind. Dadurch ergibt sich die Möglichkeit, die Löslichkeitseigenschaften der Proteine gezielt zu beeinflussen.

Durch die vernetzende Derivatisierung der Polysaccharide und Proteine wird deren Hydrogelcharakter erzeugt, der sich in einer plastischen Viskosität niederschlägt. Je höher der Unterschied zwischen Speichermodul (G') und Verlustmodul (G") ist, desto markanter sind die Hydrogeleigenschaften des Vernetzungsproduktes. Die Viskositäten der in den Beispielen verwendeten Proben bzw. deren viskoelastische Eigenschaften in wässriger Lösung (Hydrogelcharakter) sind in den beigefügten Zeichnungen dargestellt. Eine Erläuterung der Zeichnungen findet sich unmittelbar vor dem experimentellen Teil dieser Spezifikation.

Der Begriff Viskoelastizität geht von der klassischen Theorie der Elastizität aus, die mechanische Eigenschaften eines perfekt elastischen Festkörpers beschreibt. In Abhängigkeit von der Struktur eines Festkörpers, einer Schmelze, eines Gels oder einer Dispersion gibt es Abweichungen vom rein elastischen Verhalten; viskose und elastische Anteile liegen nebeneinander vor. Diese Eigenschaften werden als viskoelastisch bezeichnet.

Es hat sich nun gezeigt, dass diese viskoelastischen Eigenschaften des erfindungsgemäßen chemisch derivatisierten PPB von entscheidender Bedeutung sind, um dessen positive Wirkung als Fluid-Loss-Additiv in Bohrspülungen zu entfalten. Im experimentellen Teil dieser Patentanmeldung wird dies durch eine gezielte Fraktionierung der PPB-Hydrogele in eine Fraktion A, die eine sehr hohe plastische Viskosität besitzt, d.h. überwiegend aus den vernetzten Bestandteilen des PPB besteht, sowie in eine Fraktion B, die weitestgehend keinen Hydrogelcharakter aufweist, d.h. überwiegend aus im wässrigen Medium dispers gelösten Polymerbestandteilen des PPB besteht und kaum Eigenviskosität erzeugt, nachgewiesen.

Der chemisch derivatisierte Polysaccharid-Protein-Blend weist zudem über den gesamten pH-Bereich von 1-14 die Eigenschaft auf, Wasser zu binden und/oder zu immobilisieren.

In einer bevorzugten Ausführungsform der Erfindung enthält der erfindungsgemäße Polysaccharid-Protein-Blend, bezogen auf seinen nicht-derivatisierten, wasserfreien Zustand, 20-99 Gew.-%, bevorzugt 55-96 Gew.-%, besonders bevorzugt 70-85 Gew.-% Polysaccharide, und/oder 1-80 Gew.-%, bevorzugt 4-45 Gew.-%, besonders bevorzugt 15-30 Gew.-% Proteine.

Ein Gehalt an Polysaccharid und/oder Protein in diesem Bereich hat sich als besonders vorteilhaft im Hinblick auf die Hydrogelbildung und die Produktionskosten des PPB herausgestellt.

In einer bevorzugten Ausgestaltungsform der Erfindung weisen die löslichen Polysaccharide im erfindungsgemäßen PPB eine mittlere Molmasse von 10⁶ bis 10⁷ g/mol auf. Diese Angabe bezieht sich auf die molare Masse eines durchschnittlichen Polysaccharids im PPB, welche nicht durch die chemisch kovalente Derivatisierung hervorgerufen ist, sondern allein in der Masse des Polysaccharids ohne chemische Derivatisierung begründet ist. Vorteilhaft ist hierbei, dass der PPB im Wesentlichen die natürliche Vernetzung der Polysaccharid-Monomere über eine glykosidische Bindung aufweist. Es wurde gefunden, dass sich eine mittlere molare Masse der Polysaccharide im Bereich 10⁶ bis 10⁷ g/mol vorteilhaft auf die Hydrogel-Bildung des PPB auswirkt.

Die partiell wasserquellbaren Polysaccharide und Proteine können pflanzliche oder tierische Proteine und/oder Polysaccharide enthalten oder im Wesentlichen daraus bestehen. In dieser Hinsicht bevorzugt sind Polysaccharide und/oder Proteine aus Getreide, Pseudogetreide, pflanzlichen Knollen, pflanzlichen Rhizomen und/oder Leguminosenfrüchten. Bevorzugte Getreide sind Weizen, Dinkel, Roggen, Hafer, Gerste, Hirse, Triticale, Mais und Reis. Bevorzugte Pseudogetreide sind Buchweizen, Amaranth, Quinoa und Hanf. Bevorzugte pflanzliche Knollen sind Kartoffel, Süßkartoffel (Batate) und Maniok (Tapioca). Bevorzugte pflanzliche Rhizomen sind Wasserbrotwurzel (Taro) und Pfeilwurz (Arrow Root) und bevorzugte Leguminosen sind Bohnen, Erbsen, Linsen und Esskastanie. Weiterhin kann pflanzliches Mark verwendet werden, bevorzugt Mark der Sagopalme. Besonders bevorzugt sind Polysaccharide und/oder Proteine aus Roggen, insbesondere in Form von Roggenmehlen.

Der Vorteil von Polysacchariden und/oder Proteinen aus einer pflanzlichen Quelle ist, dass nachwachsende Rohstoffe als Rohprodukt bzw. Edukt für die Herstellung des erfindungsgemäßen PPB verwendet werden können. Dies stellt einen enormen ökonomischen und ökologischen Vorteil dar.

Die Polysaccharide und Proteine des erfindungsgemäßen PPB können mindestens eine nicht-vernetzende Derivatisierung, aber auch mehrere solcher Derivatisierungen aufweisen, bevorzugt ausgewählt aus der Gruppe bestehend aus neutralen, hydrophoben und kationischen Substituenten.

In einer bevorzugten Ausgestaltungsform weisen die Polysaccharide und Proteine im PPB eine Hydroxyalkylierung auf, bevorzugt eine Hydroxyalkylierung durch ein Hydroxylierungsmittel ausgewählt aus der Gruppe der Oxirane, besonders bevorzugt ausgewählt aus der Gruppe bestehend aus Alkylenoxiden mit geradkettigen oder verzweigten C₁₋₁₈-Alkylgruppen, insbesondere Ethylenoxid und/oder Propylenoxid.

Des Weiteren kann der erfindungsgemäße PPB eine Funktionalisierung mit chemischen Verbindungen aus der Gruppe bestehend aus quaternären Ammoniumsalzen und organischen Chlorverbindungen, bevorzugt 3-Chloro-2-hydroxypropyltrimethylammoniumchlorid und/oder 3-Chloro-2-hydroxypropyl-alkyl-dimethylammoniumchlorid aufweisen. Besonders bevorzugt ist eine Alkylierung mit Trialkylammoniumethylchlorid und/oder Trialkylammoniumglycid. Die Alkylgruppe kann jeweils gleich oder verschieden sein und/oder mindestens eine geradkettige oder verzweigte C₁-C₁₈-Alkylgruppe enthalten oder daraus bestehen.

Die Polysaccharide und Proteine in dem erfindungsgemäßen PPB können mit einer Menge von 0,001-2,0 mol, bevorzugt 0,01-0,5 mol, besonders bevorzugt 0,1-0,4 mol, nicht-vernetztendem Derivatisierungsreagenz pro mol Anhydroglukoseeinheit der Polysaccharide modifiziert sein.

In dieser Hinsicht können die Polysaccharide und/oder Proteine des PPB in Bezug auf die nicht-vernetzende Derivatisierung, einen Substitutionsgrad (DS) von 0,001-1,0, bevorzugt 0,01-0,5, besonders bevorzugt 0,1-0,4, aufweisen.

Bevorzugt sind die Polysaccharide und Proteine dergestalt nicht-vernetzend substituiert, dass die Polysaccharide nach der Derivatisierung keine kompakte Struktur ausbilden können und/oder die Proteine in denaturierter Form vorliegen. In dieser Hinsicht ist vor allem ein Substitutionsgrad ≥ 0,1 in Bezug auf die Polysaccharide vorteilhaft, um die Rekristallisation der modifizierten Polysaccharide zu verhindern.

Hinsichtlich der chemisch kovalenten Vernetzung können die Polysaccharide und Proteine in dem PPB mit einer Menge von 0,001-1,0 mol, bevorzugt 0,01-0,5 mol, besonders bevorzugt 0,05-0,2 mol, vernetzendem Derivatisierungsreagenz pro mol Anhydroglucoseeinheit der Polysaccharide modifiziert sein. In dieser Hinsicht ist ein Vernetzungsgrad ≥ 0,05 mol vernetztendem Derivatisierungsreagenz pro mol Anhydroglukoseeinheit der Polysaccharide besonders vorteilhaft für eine höhere Klebewirkung des PPB.

Bevorzugt sind die Polysaccharide und Proteine in dem erfindungsgemäßen PPB über ein Derivatisierungsreagenz ausgewählt aus der Gruppe bestehend aus
a) Epihalohydrin, Diglycidylethern und (Poly)alkylenglykoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäureester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid,
vernetzt.

In dem erfindungsgemäßen PPB kann nur ein Teil der Proteine und Polysaccharide zumindest bereichsweise chemisch kovalent vernetzt sein. Bevorzugt ist diese Vernetzung über Hydroxyl-, Amino- und/oder Sulfhydrylgruppen auf den Proteinen und/oder Polysacchariden realisiert. In dieser Hinsicht kann zumindest ein Teil der Proteine und/ oder Polysaccharide zumindest bereichsweise ausschließlich über funktionelle Gruppen chemisch kovalent vernetzt sein, welche aufgrund der nicht-vernetztenden Derivatisierung auf den Polysacchariden und/oder Proteinen vorhanden sind bzw. eingeführt wurden.

Erfindungsgemäß kann der PPB im alkalischem Milieu einen löslichen Anteil von 0-30 % aufweisen.

Eine bevorzugte Ausführungsform der Erfindung betrifft die Verwendung des chemisch derivatisierten PPB als Fluid-Loss-Additiv oder als ein die Rheologie modifizierendes Additiv für wasserbasierte Bohrspülungen. Es können weitere, an sich im Stand der Technik bekannte, für wasserbasierte Bohrspülungen geeignete Additive zusammen mit dem erfindungsgemäßen Additiv eingesetzt werden. Der besagte chemisch derivatisierte PPB wird bevorzugt bei der Erschließung, Komplettierung und Ausbeutung von unterirdischen Erdöl- und Erdgasvorkommen sowie bei Tiefenbohrungen verwendet.

Grundsätzlich konnte an Hand der nachfolgenden anwendungstechnischen Untersuchungen gezeigt werden, dass der erfindungsgemäß chemisch modifizierte PPB als Additiv in Bohrspülungen geeignet ist. In einem Fluid-Loss-Test erweist sich zwischen den beiden Fraktionen A und B (im Vergleich zur Referenz Polydrill ® der BASF SE) ein erheblicher Wirkungsunterschied, der auf das Vorhandensein eines Hydrogelcharakters im chemisch modifizierten PPB zurückzuführen ist. Mit anderen Worten, aus anwendungstechnischer Sicht ist bei der Verwendung von Additiven für Bohrspülungen der Hydrogelcharakters des Additivs von essentieller Bedeutung. Demzufolge erweisen sich die Probe 1 und Probe 5 (Fraktion B), die (fast) keine chemische Vernetzung aufweisen und somit keine pseudoplastische Viskosität besitzen, als wirkungslose Additive, während die Probe 4 (Fraktion A), die durch die Vernetzung ein hohes viskoelastisches Verhalten zeigt, als ein ausgesprochen wirkungsvolles Additiv (Tabelle 2).

Die Verwendbarkeit des chemisch modifizierten PPB in Bohrspülungen wird zusätzlich erhärtet durch rheologische Untersuchungen von Bohrspülungen nach API - Recommended Practice For Field Testing Of Water-Based Drilling Fluids 13 B-1. Die rheologischen Daten in Beispiel 3 zeigen, dass in allen vier verschiedenen Bohrspülungen das erfindungsgemäße Additiv "Fraktion A" (Probe 4) deutlich höhere Viskositäten bei niedrigen Scherraten aufweist. Dies wird weiterhin veranschaulicht durch die Fließgrenze (YP). Eine hohe Fließgrenze bzw. eine hohe Viskosität bei niedrigen Scherraten ist für die Funktion einer Bohrspülung sehr vorteilhaft, da dies eine positive Aussage über die Tragfähigkeit der Bohrspülung im Ruhezustand liefert. Während des Bohrvorgangs befindet sich die Bohrspülung meistens im Fluss. Es ist aber während des Bohrens immer wieder notwendig den Bohrvorgang anzuhalten, um beispielsweise den Bohrmeißel zu wechseln oder das Bohrgestänge zu verlängern. Während dieser Phasen befindet sich dann die Bohrspülung in Ruhe. Aber auch in diesen Ruhephasen ist es sehr wichtig, dass die Bohrspülung ihre Funktion erfüllt und das Bohrklein in Schwebe hält. Ein Absinken des Bohrkleins würde zu einer Blockierung und einer daraus resultierenden Beschädigung des Bohrmeißels und -gestänges beim Wiederanfahren des Bohrvorgangs führen. Zusätzlich wird mit dem erfindungsgemäßen Additiv eine bessere Kontrolle des Flüssigkeitsverlusts erreicht (siehe Beispiel 2 und Beispiel 3 hinsichtlich einer CaCl₂-haltige Bohrspülung).

Anhand der nachfolgenden Beispiele und unter Bezug auf die beigefügten Zeichnungen soll der erfindungsgemäße Gegenstand nun näher erläutert werden, ohne diesen auf die hier dargestellten spezifischen Ausführungsformen einschränken zu wollen.

In den Zeichnungen zeigt:

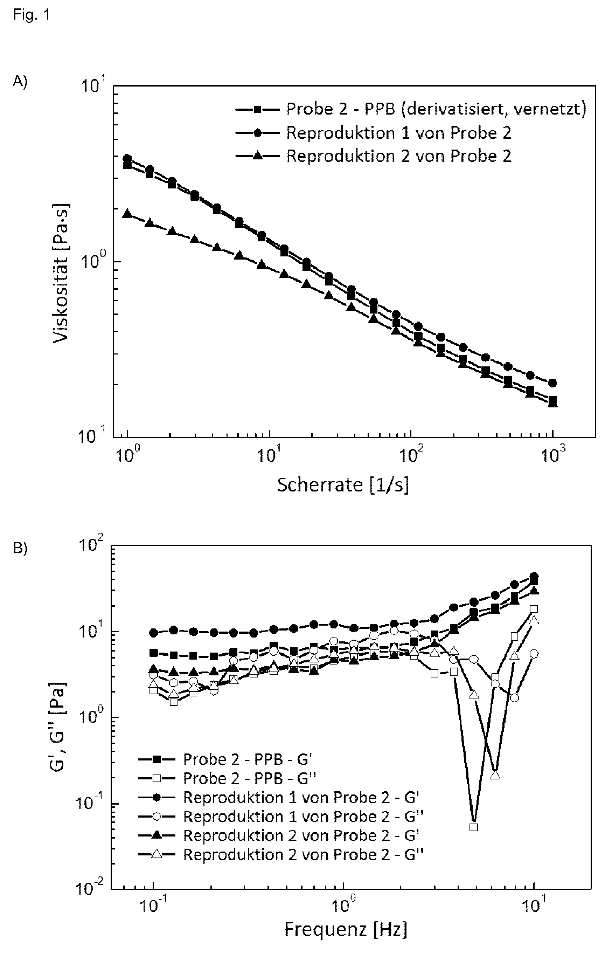

- Fig. 1 A): den Viskositätsverlauf der Probe 2 in Abhängigkeit von der Scherrate,
- Fig. 1 B): den Verlauf von G' und G" der Probe 2 in Abhängigkeit von der Frequenz,

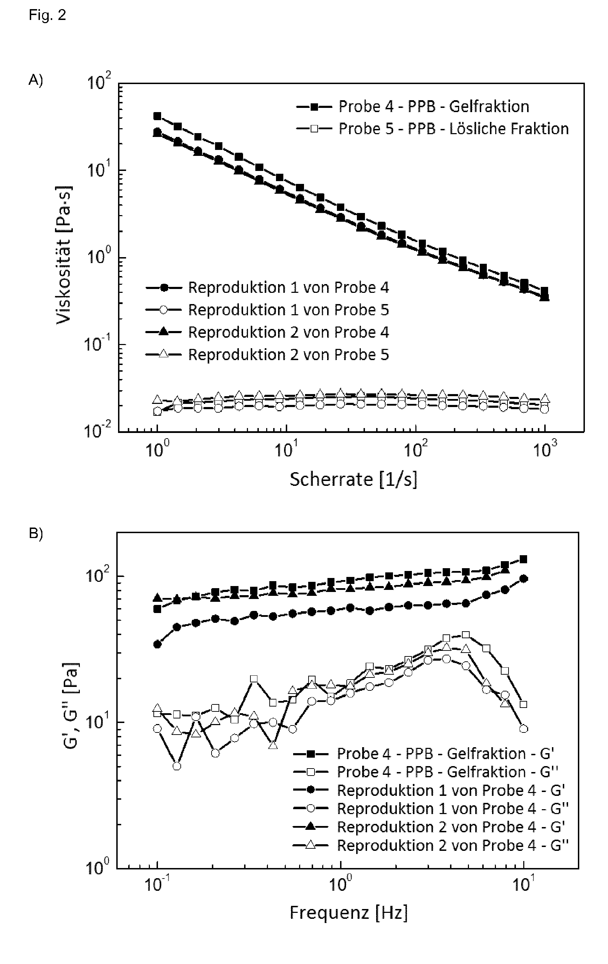

- Fig. 2 A): den Viskositätsverlauf der Proben 4 und 5 in Abhängigkeit von der Scherrate,
- Fig. 2 B): den Verlauf von G' und G" der Probe 4 in Abhängigkeit von der Frequenz.

### BEISPIELE

### Beispiel 1: Zusammensetzung chemisch modifizierter PPB

### PPB-Rohstoffe:

Im Folgenden werden verschiedenen Quellen für Polysaccharid-Protein-Blends aufgeführt, welche als Edukte zur Herstellung des erfindungsgemäßen PPB herangezogen wurden. Die Summe der Inhaltsstoffe ergibt nicht immer 100 Gew.-%, da Fette, Zucker und die Nicht-Stärke-Polysaccharide nicht ermittelt wurden, wie z.B. das Roggenmehl Type 997 (Industriemuster von der Kampffmeyer Mühlen GmbH aus der Walzenvermahlung) mit folgender Zusammensetzung: Stärke 74,0 bis 76,0 %; Protein 7,5 bis 8,5 %; Mineralstoffe 0,9 bis 1,0 % und Pentosane 4,8 bis 5,1 %. Weitere PPB konnten in Form von Weizen- und Gerstenmehlen gewonnen werden. Je nach Art und Weise der Vorbehandlungen (z.B. Mahlung, Sichtung, Fraktionierung, etc.) konnten darüber hinaus das Verhältnis von Polysaccharid und Protein beeinflusst bzw. variiert werden: Stärke 55,0 bis 86,0 %; Protein 4,5 bis 15,0 %; Mineralstoffe 0,4 bis 1,9 %; und Pentosane 1,0 bis 5,1 %.

### Herstellung chemisch modifizierter PPB:

Zunächst wurden 1065 g Wasser in einem Reaktor vorgelegt und unter Rühren 9,34 g CaO zugegeben. Anschließend wurden 335 g Roggenmehl unter Rühren bei Raumtemperatur zugegeben und 2 h gerührt. Nach dieser Behandlung war das Roggenmehl partiell gelöst und vollständig gequollen. Nach Dispergieren der alkalischen Suspension wurden 107,5 g Epoxypropan (Propylenoxid) als nicht-vernetzendes Derivatisierungsreagenz zugegeben. Es wurde bei 35 °C für 24 Stunden gerührt. Danach wurden 1,712 g Epichlorhydrin ("ECH") als vernetzendes Derivatisierungsreagenz zugegeben und bei 35 °C für 24 Stunden gerührt. Abschließend wurde das Produkt optional mit 0,5 N H₂SO₄ neutralisiert, getrocknet und vermahlen. Als Produkt wurde ein chemisch derivatisierter Polysaccharid-Protein-Blend (PPB) erhalten, welcher in wässrigem Medium ein Hydrogel ausbildete. Der molare Veretherungsgrad (MS) des Produktes betrug ca. 0,5 und der Substitutionsgrad (DS) ca. 0,23.

### Fraktionierung chemisch modifizierter PPB

Die Fraktionierung des PPB in eine wasserunlösliche Fraktion und in eine wasserlösliche Fraktion erfolgte nach der folgenden Vorschrift. Hierfür wurde es mit etwa 5 Gew.-% Wasser versetzt und 40 Gew.-% Ethanol zugegeben. Anschließend wurde die entstandene Dispersion bei 38600 g für 1,5 Stunden zentrifugiert. Beim Bodensatz ("Fraktion A") handelte es sich um ein reines PPB-Hydrogel. Zur Trocknung wurde der Bodensatz mit Aceton entwässert, über eine Nutsche abgesaugt, bei 50 °C im Vakuum getrocknet und anschließend vermahlen. Hierbei wurde ein trockener PPB erhalten, welcher sehr rein war und in wässrigem Medium ein Hydrogel ausbildete. Die hergestellten und anwendungstechnisch untersuchten chemisch modifizierten PPB haben die in der nachfolgenden Tabelle 1 wiedergegebenen Rohstoffquellen und Zusammensetzungen (die Angaben erfolgen in Gew.-%):

**Tabelle 1**

| Probe | PPB | Derivatisierung ¹⁾ | Vernetzung ²⁾ | Neutralisation der Probe ³⁾ | MS(HP)⁴⁾ | Viskosität G'/G" |
|---|---|---|---|---|---|---|
| 1 | Roggenmehl ⁵⁾ | PO | - | nein | 0,58 | |
| 2 | Roggenmehl ⁶⁾ | PO | ECH | nein | n.b. | Fig. 1 |
| 3 | Roggenmehl ⁷⁾ | PO | ECH | ja | n.b. | Fig. 1 |
| 4 | Fraktion A ⁸⁾ | | | | 0,51 | Fig. 2 |
| 5 | Fraktion B ⁹⁾ | | | | 0,57 | Fig. 2 |

| | | | | | | |
|---|---|---|---|---|---|---|
| ¹⁾ 1,0 Mol-Äquivalente Propylenoxid/Anhydroglucoseeinheit (162,9 g/mol), Katalysator: CaO ²⁾ 0,01 Mol-Äquivalente des Vernetzungsmittels Epichlorhydrin/Anhydroglucoseeinheit ³⁾ Neutralisierung des Katalysators mit 0,5 N H₂SO₄ ⁴⁾ MS(HP) = Molare Substitution mit Hydroxypropylether (ermittelt über NMR-Spektroskopie) ⁵⁾ Stärke 81,0 - 85,0 %; Protein 4,5 - 6,0 %; Mineralstoffe 0,5 - 0,7 %; Pentosane 1,8 - 3,0 % ⁶⁾ Stärke 74,0 - 76,0 %; Protein 7,5 - 8,5 %; Mineralstoffe 0,9 - 1,0 %; Pentosane 4,8 - 5,1 % ⁷⁾ Stärke 83,9 %; Protein 5,4 %; Mineralstoffe 0,65 %; Pentosane 2,3 % ⁸⁾ Fraktion A (Wasserunlösliche Fraktionen von Probe 3): Weitestgehend mit ECH vernetzt ⁹⁾ Fraktion B (Wasserlösliche Fraktionen von Probe 3): Weitestgehend unvernetzt | | | | | | |

### Beispiel 2: Fluid-Loss-Test

In einer Bohrspülung aus 350 g Tixoton ®-Suspension (Bentonit, 4 Gew.-% in H₂O, Süd-Chemie AG), 118 g NaCl, 10,5 g Probe gemäß Beispiel 1 und 2,0 ml Antifoam 422 (Entschäumer) wurde der Flüssigkeitsverlust nach "API Recommended Practice 13B" bestimmt. Die Alterung im Rollenofen erfolgte bei 121 °C. Polydrill ®, ein Fluid-Loss-Additiv der BASF SE, diente als Vergleichswert. Die Ergebnisse sind in der Tabelle 2 wiedergegeben.

**Tabelle 2**

| Probe | Fluid-Loss [ml] | Fluid-Loss [%] | Bemerkungen |
|---|---|---|---|
| Polydrill ® | 13,5 | 100 | |
| 1 | 52 | 385 | Ausfluss begann schon vor Druckanlegung |
| 2 | 61 | 452 | Ausfluss begann schon vor Druckanlegung |
| 4 | 7,5 | 56 | |
| 5 | 82,5 | 611 | Schäumte stark |

Das Beispiel zeigt, dass mit der erfindungsgemäßen "Fraktion A" ein deutlich geringerer Flüssigkeitsverlust ("Fluid-Loss") erreicht wird als mit Polydrill ® (7,5 ml vs. 13,5 ml).

### Beispiel 3: Flüssigkeitsverlust- und Rheologie-Test

Nach "API Recommended Practice 13B" wurden in einer Bohrspülung aus 420 ml H₂O, 18 g Cebogel ® (Bentonit, Cebo Holland B.V.), 10 g Antisol ® FL 10 (polyanionische Zellulose der DOW Chemicals) bzw. 10 g der Probe Nr. 4 (Fraktion A) gemäß Beispiel 1, sowie 24 g Ba₂SO₄ und weiteren Zusätzen gemäß Tabelle 3 der Flüssigkeitsverlust und die Rheologie bestimmt. Die Alterung erfolgte bei 121 °C über 16 h. Die Ergebnisse sind in der nachfolgenden Tabelle 3 wiedergegeben.

**Tabelle 3**

| Probe | Zusätze | pH | Fann 35-Rheologie [lbs/100 ft²] bei den folgenden Drehzahlen [min⁻¹] | | | | | | PV | YP | Gels 10"/10' | FL [ml] |
|---|---|---|---|---|---|---|---|---|---|---|---|---|
| | | | 600 | 300 | 200 | 100 | 6 | 3 | | | | |
| | | | | | | | | | | | | |
| Antisol | keine | 9,5 | 232 | 140 | 104 | 63 | 13 | 10 | 92 | 48 | 11/25 | 3,5 |
| 4 | keine | 10,4 | 252 | 192 | 175 | 146 | 121 | 109 | 60 | 132 | 96/101 | 3,5 |
| | | | | | | | | | | | | |

| | NaCl | | | | | | | | | | | |
|---|---|---|---|---|---|---|---|---|---|---|---|---|
| Antisol | 20,8 g | 11 | 213 | 151 | 128 | 95 | 49 | 48 | 62 | 89 | 31/67 | 3 |
| 4 | 20,8 g | 10 | 211 | 189 | 174 | 159 | 133 | 129 | 22 | 167 | 105/104 | 4,5 |
| | | | | | | | | | | | | |

| | Meersalz | | | | | | | | | | | |
|---|---|---|---|---|---|---|---|---|---|---|---|---|
| Antisol | 14g | 10,5 | 66 | 35 | 25 | 13 | 2 | 2 | 31 | 4 | 3/3 | 4,5 |
| 4 | 14g | 10,6 | 140 | 98 | 82 | 67 | 29 | 25 | 42 | 56 | 21/35 | 4,5 |
| | | | | | | | | | | | | |

| | CaCl₂ | | | | | | | | | | | |
|---|---|---|---|---|---|---|---|---|---|---|---|---|
| Antisol | 10g | | 43 | 36 | 32 | 29 | 14 | 8 | 7 | 29 | 8/7 | bläst aus |
| 4 | 10g | 10,8 | 103 | 87 | 77 | 66 | 47 | 44 | 16 | 71 | 36/24 | 11,5 |

| | | | | | | | | | | | | |
|---|---|---|---|---|---|---|---|---|---|---|---|---|
| PV: "Plastic Viscosity", berechnet aus der Differenz der Werte bei 600 und 300 min⁻¹ in [Ibs/100 ft²] YP: "Yield Point", berechnet aus der Differenz zwischen dem Wert bei 300 min⁻¹ und PV [Ibs/100 ft²] Gels: Gelstärke, Wert bei 3 min⁻¹ nach 10 s/Wert bei 3 min⁻¹ nach 10 min [Ibs/100 ft²] FL: "Fluid Loss", Flüssigkeitsverlust gemäß API | | | | | | | | | | | | |

Das Beispiel zeigt, dass die erfindungsgemäße "Fraktion A" in Leitungswasser, Salzwasser und Meerwasser dem Antisol ® FL 10 zumindest ebenbürtig ist, in der CaCl₂-haltigen Bohrspülung jedoch deutlich überlegen ist.

## Patentansprüche

1. Verwendung eines chemisch derivatisierten Polysaccharid-Protein-Blends, enthaltend partiell wasserquellbare Polysaccharide und Proteine, wobei die Polysaccharide und Proteine jeweils zumindest partiell chemisch kovalent modifiziert sind durch
a) mindestens eine nicht-vernetzende Derivatisierung; und
b) mindestens eine vernetzende Derivatisierung, wobei die Polysaccharide und Proteine zumindest partiell chemisch kovalent miteinander vernetzt sind, und
wobei der chemisch derivatisierte Polysaccharid-Protein-Blend in wässrigem Medium ein Hydrogel ausbildet, als Additiv für Bohrspülungen.

2. Verwendung nach Anspruch 1, **dadurch gekennzeichnet, dass** der Polysaccharid-Protein-Blend, bezogen auf seinen nicht-derivatisierten, wasserfreien Zustand, 20-99 Gew.-%, bevorzugt 55-96 Gew.-%, besonders bevorzugt 70-85 Gew.-% Polysaccharide; und/oder
1-80 Gew.-%, bevorzugt 4-45 Gew.-%, besonders bevorzugt 15-30 Gew.-% Proteine enthält.

3. Verwendung nach Anspruch 1 oder 2, **dadurch gekennzeichnet, dass** die Polysaccharide und Proteine pflanzliche Proteine und/oder Polysaccharide enthalten oder daraus bestehen, bevorzugt Polysaccharide und/oder Proteine aus Getreide, besonders bevorzugt aus Roggen.

4. Verwendung nach einem der Ansprüche 1 bis 3, **dadurch gekennzeichnet, dass** die Polysaccharide und Proteine mindestens eine Monosubstitution oder Bisubstitution aufweisen, bevorzugt ausgewählt aus der Gruppe bestehend aus neutraler, hydrophober und kationischer Substitution.

5. Verwendung nach einem der Ansprüche 1 bis 4, **dadurch gekennzeichnet, dass** die Polysaccharide und Proteine eine Funktionalisierung mit chemischen Verbindungen aus der Gruppe bestehend aus quaternären Ammoniumsalzen und organischen Chlorverbindungen aufweisen, bevorzugt 3-Chloro-2-hydroxypropyl-trimethylammoniumchlorid und/oder 3-Chloro-2-hydroxypropyl-alkyl-dimethyl-ammoniumchlorid, besonders bevorzugt Trialkylammoniumethylchlorid und/oder Trialkylammoniumglycid, wobei die Alkylgruppe insbesondere mindestens eine geradkettige oder verzweigte C₁-C₁₈ Alkylgruppe enthält oder daraus besteht und/ oder die Polysaccharide und Proteine eine Hydroxyalkylierung aufweisen, bevorzugt ausgewählt aus der Gruppe der Oxirane, besonders bevorzugt ausgewählt aus der Gruppe bestehend aus Alkylenoxiden mit geradkettigen oder verzweigten C₁-C₁₈ Alkylgruppen, insbesondere Ethylenoxid und/oder Propylenoxid.

6. Verwendung nach einem der Ansprüche 1 bis 5, **dadurch gekennzeichnet, dass** die Polysaccharide und Proteine mit einer Menge von 0,001-2,0 mol, bevorzugt 0,01-0,5 mol, besonders bevorzugt 0,1-0,4 mol, nicht-vernetztendem Derivatisierungsreagenz pro mol Anhydroglukoseeinheit der Polysaccharide modifiziert sind und/oder dass die Polysaccharide und/oder Proteine, in Bezug auf die nicht-vernetzende Derivatisierung, einen Substitutionsgrad (DS) von 0,001-1,0, bevorzugt 0,01-0,5, besonders bevorzugt 0,1-0,4, aufweisen.

7. Verwendung nach einem der Ansprüche 1 bis 6, **dadurch gekennzeichnet, dass** die Polysaccharide und Proteine mit einer Menge von 0,001-1,0 mol, bevorzugt 0,01-0,5 mol, besonders bevorzugt 0,05-0,2 mol, vernetzendem Derivatisierungsreagenz pro mol Anhydroglucoseeinheit der Polysaccharide modifiziert sind,
wobei die Polysaccharide und Proteine bevorzugt über ein Derivatisierungsreagenz ausgewählt aus der Gruppe bestehend aus
a) Epihalohydrin, Diglycidylethern und (Poly)alkylenglykoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäureester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid,
vernetzt sind.

8. Verwendung nach einem der Ansprüche 1 bis 7, **dadurch gekennzeichnet, dass** zumindest ein Teil der Polysaccharide und Proteine in dem chemisch derivatisierten Polysaccharid-Protein-Blend zumindest bereichsweise chemisch kovalent vernetzt ist, bevorzugt über Hydroxyl-, Amino- und/oder Sulfhydrylgruppen auf den Proteinen und/oder Polysacchariden, und/oder zumindest bereichsweise ausschließlich über funktionelle Gruppen chemisch kovalent vernetzt ist, welche aufgrund der nicht-vernetztenden Derivatisierung auf den Polysacchariden und Proteinen vorhanden sind.

9. Verwendung nach einem der Ansprüche 1 bis 8, **dadurch gekennzeichnet, dass** der chemisch derivatisierte Polysaccharid-Protein-Blend im alkalischem Milieu einen löslichen Anteil von 0-30 % aufweist.

10. Verwendung nach einem der Ansprüche 1 bis 9, **dadurch gekennzeichnet, dass** das Additiv ein Fluid-Loss-Additiv ist.

11. Verwendung nach einem der Ansprüche 1 bis 9, **dadurch gekennzeichnet, dass** das Additiv ein die Rheologie modifizierendes Additiv ist.

12. Verwendung nach einem der Ansprüche 1 bis 11 als Additiv für wasserbasierte Bohrspülungen.

13. Verwendung nach einem der Ansprüche 1 bis 12 als Additiv zusammen mit anderen für wasserbasierte Bohrspülungen geeigneten Additiven.

14. Verwendung nach einem der Ansprüche 1 bis 13 als Additiv bei der Erschließung, Komplettierung und Ausbeutung von unterirdischen Erdöl- und Erdgasvorkommen sowie bei Tiefenbohrungen.
